# EUROPEAN PATENT APPLICATION

(11) **EP 4 760 097 A1**
(43) Date of publication of application: **17.06.2026**
(21) Application number: 25214636.0
(22) Date of filing: 10.11.2025
(51) Int. Cl.: F04B 39/10, F04B 41/06, F04B 49/22, F04C 28/02, F04C 28/24, F16K 31/06, F16K 3/02

(54) **SUCTION PRESSURE REGULATING VALVE AND PARALLEL COMPRESSOR SYSTEM**

(30) Priority: 12.12.2024 CN 202423074878 U
(71) Applicant: Danfoss (Tianjin) Ltd., Tainjin 301700 (CN)
(72) Inventor: Peng, LIU, Nordborg (DK); Ying, DONG, Nordborg (DK); Xiaojing, ZHOU, Nordborg (DK); Liang, FAN, Nordborg (DK); Tao, WANG, Nordborg (DK)
(74) Representative: Patentanwälte Olbricht Buchhold Keulertz

(57) **Abstract**

A suction pressure regulating valve comprises a valve body (9) having a suction channel (11) for communicating with a suction port (301) of a compressor (30), a valve core (3) disposed in the valve body (9) and allowed to extend into and retract from the suction channel (11) to change a flow area of the suction channel (11), and a rotating member (4) rotatably connected to the valve body (9) and cooperating with the valve core (3), wherein the rotating member (4) is configured to rotate relative to the valve body (9) so as to drive the valve core (3) to extend into and retract from the suction channel (11). The suction pressure regulating valve enables real-time flow control in accordance with different working conditions. A parallel compressor system comprises a plurality of compressors (30), a pressure sensor (20) for sensing an internal pressure chamber of a compressor (30), and a suction pressure regulating valve in communication with a suction port (301) of a compressor, such that the suction flow is regulated according to the sensing value of the pressure sensor (20).

## Description

### TECHNICAL FIELD

The present disclosure relates to a technical field of air conditioning systems, in particular to a suction pressure regulating valve and a parallel compressor system.

### BACKGROUND

Compressor parallel technology is increasingly widely applied to the air conditioning and refrigeration industry, with advantages such as convenient energy regulation, high efficiency under partial load, convenient shutdown and maintenance of a single unit, and low cost. When two or more compressors with different flow rates are connected in parallel, a flow restriction ring is usually installed at the suction port of the compressor with high pressure in the internal pressure chamber to reduce the pressure of the airflow flowing from a parallel pipeline, thereby balancing the pressures in the internal pressure chambers between the compressors and consequently balancing the oil levels of the oil sumps in the compressors.

However, the diameter of the flow restriction ring is fixed, and the pressure regulation range of a single flow restriction ring is limited. With the increasing operating range of parallel units, a good pressure equalization effect cannot be achieved under all working conditions. Moreover, during testing and calibration, each replacement of the flow restriction ring requires disassembling and assembling the parallel pipeline and recovering the refrigerant, which increases time costs and the risk of refrigerant leakage. Multiple disassembly and assembly of the pipeline also easily cause increased stress, and causes the pipeline to be prone to fracture, resulting in refrigerant leakage.

### SUMMARY

In view of this, the present disclosure provides a suction pressure regulating valve and a parallel compressor system, which may solve the problems of high cost and poor stability caused by the flow restriction ring.

In order to achieve the above-mentioned objective, the present disclosure provides the following technical solutions.

A suction pressure regulating valve, comprising:
a valve body having a suction channel for communicating with a suction port of a compressor;
a valve core disposed in the valve body and allowed to extend into and retract from the suction channel to change a flow area of the suction channel; and
a rotating member rotatably connected to the valve body and cooperating with the valve core, wherein the rotating member is configured to rotate relative to the valve body so as to drive the valve core to extend into and retract from the suction channel.

Optionally, the rotating member is a valve stem threadedly connected to the valve body, a first end of the valve stem is located outside the valve body, and a second end of the valve stem is located inside the valve body and rotatably connected to the valve core;
a guiding structure is provided between the valve body and the valve core, and the guiding structure is configured to limit the rotation of the valve core relative to the valve body.

Optionally, an annular protrusion is provided on an outer periphery of the second end of the valve stem, a rotating groove in which the annular protrusion is embedded is provided on the valve core, and an inner diameter of an opening of the rotating groove is less than an outer diameter of the annular protrusion to limit the annular protrusion from protruding from the opening of the rotating groove.

Optionally, a notch into which the annular protrusion extends is provided on a groove wall of the rotating groove.

Optionally, the valve body comprises:
a three-way valve seat having two straight-through ports and one side port, wherein the suction channel is formed between the two straight-through ports; and
a valve sleeve sleeved on outer peripheries of the valve core and the valve stem and connected to the side port of the three-way valve seat,
wherein the valve stem is threadedly connected to the valve sleeve, and the valve core extends into and retracts from the suction channel through the side port.

Optionally, a first sealing structure surrounding the valve core is provided between the valve sleeve and the three-way valve seat; and
a second sealing structure surrounding the valve core is provided between the valve sleeve and the valve core.

Optionally, the valve core has a plate portion, which is allowed to extend into and retract from the suction channel to change the flow area of the suction channel.

Optionally, the plate portion is perpendicular to the flow direction of the suction channel.

Optionally, the suction pressure regulating valve further comprises a valve cap, wherein the valve cap is sleeved on the first end of the valve stem and is allowed to drive the valve stem to rotate relative to the valve body; a marking structure is provided between the valve cap and the valve body to indicate a position of the valve core relative to the suction channel.

Optionally, the marking structure comprises scale marks arranged in a ring shape on the valve body, and an indicator mark disposed on the valve cap and pointing to the scale marks.

Optionally, a positioning structure is provided between the valve cap and the valve body to position the valve cap and the valve body at one of marking positions in the marking structure.

Optionally, the positioning structure comprises a positioning pin and a plurality of positioning holes, the plurality of positioning holes are arranged in a ring shape, and the positioning pin is allowed to elastically abut in any one of the positioning holes; one of the positioning pin and the positioning hole is disposed on the valve body, and the other of the positioning pin and the positioning hole is disposed on the valve cap.

Optionally, the suction pressure regulating valve further comprises an electromagnetic assembly, wherein the electromagnetic assembly has a stator and a rotor, one of the stator and the rotor is disposed on the rotating member, and the other of the stator and the rotor is disposed on the valve body; the electromagnetic assembly is energized to cause the stator and the rotor to rotate relative to each other, so as to drive the valve stem and the valve body to rotate relative to each other.

A parallel compressor system, comprising:
a plurality of compressors connected in parallel;
a pressure sensor configured to sense a pressure in an internal pressure chamber of the compressor; and
a valve element, wherein the valve element is in communication with a suction port of the compressor, such that a flux of the valve element is regulated according to a sensing value of the pressure sensor, and the valve element is the suction pressure regulating valve according to any one of the above items.

Optionally, the suction pressure regulating valve has an electromagnetic assembly, and the electromagnetic assembly is in communication connection with the pressure sensor to adjust a flow area of the suction channel according to the sensing value of the pressure sensor.

For the suction pressure regulating valve and the parallel compressor system provided by the present disclosure, in use, the suction pressure regulating valve is installed at the suction port of the compressor; by adjusting the rotation of the rotating member relative to the valve body, the valve core may be caused to extend into and retract from the suction channel of the valve body, which may change the flow area of the suction channel, thereby regulating the suction flow at the suction port of the compressor and regulating the pressure in the internal pressure chamber of the compressor. In this way, by using the suction pressure regulating valve, the pressure of the compressor may be regulated in real time according to different working conditions or flows, which may allow the compressor to achieve the good pressure equalization effect under various working conditions without repeated disassembly and assembly of pipelines for debugging, and to have superior reliability and safety.

### BRIEF DESCRIPTION OF THE DRAWINGS

In order to more clearly illustrate embodiments of the present disclosure or the technical solutions in the prior art, the drawings required to be used in the description of the embodiments or the prior art will be briefly described below. It is apparent that the drawings in the following description are only embodiments of the present disclosure, and other drawings may be obtained by those of ordinary skill in the art according to the provided drawings without creative labor.
FIG. 1 shows a perspective view of a suction pressure regulating valve according to some embodiments of the present disclosure;
FIG. 2 shows a cross-sectional view of a suction pressure regulating valve according to some embodiments of the present disclosure;
FIG. 3 shows a cross-sectional view of a valve cap according to a first embodiment of the present disclosure;
FIG. 4 shows a perspective view of a suction pressure regulating valve according to the first embodiment of the present disclosure;
FIG. 5 shows a cross-sectional view of the suction pressure regulating valve according to the first embodiment of the present disclosure;
FIG. 6 shows a cross-sectional view of a suction pressure regulating valve according to a second embodiment of the present disclosure;
FIG. 7 shows a perspective view of a three-way valve seat according to some embodiments of the present disclosure;
FIG. 8 shows a perspective view of a valve core according to some embodiments of the present disclosure;
FIG. 9 shows a perspective view of a valve stem according to some embodiments of the present disclosure;
FIG. 10 shows a schematic diagram of a parallel compressor system according to some embodiments of the present disclosure; and
FIG. 11 shows a schematic diagram of a parallel compressor system according to some other embodiments of the present disclosure.

In the figures:
1. Three-way valve seat; 11. Suction channel; 12. Side port; 13. Straight-through port; 2. Valve sleeve; 21. Scale mark; 22. Positioning hole; 3. Valve core; 31. Core portion; 32. Plate portion; 33. Rod portion; 34. Rotating groove; 35. Notch; 4. Valve stem; 41. Annular protrusion; 42. Annular groove; 43. Square pin; 5. Valve cap; 51. Indicator mark; 52. Positioning pin; 6. Electromagnetic assembly; 61. Rotor; 62. Stator; 7. First sealing structure; 8. Second sealing structure; 9. Valve body; 10. Suction pressure regulating valve; 20. Pressure sensor; 30. Compressor; 301. Suction port.

### DETAILED DESCRIPTION OF EMBODIMENTS

Technical solutions in embodiments of the present disclosure will be described clearly and completely with reference to the accompanying drawings in embodiments of the present disclosure. It is obvious that the embodiments described are only some embodiments of the present disclosure, rather than all embodiments. All other embodiments, which may be derived by those of ordinary skill in the art from embodiments in the present disclosure without creative labor, are intended to fall within the protective scope of the present disclosure.

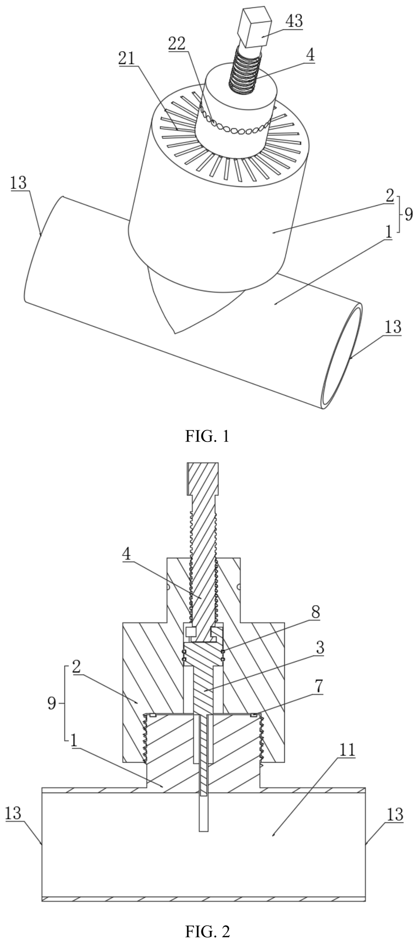

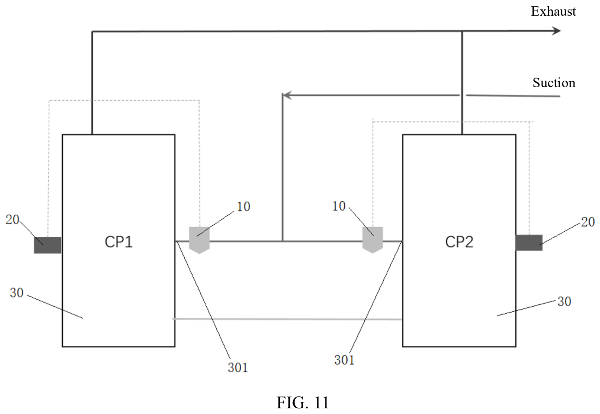

As shown in FIG. 1 to FIG. 11, embodiments of the present disclosure provide a suction pressure regulating valve 10, which comprises a valve body 9, a valve core 3, and a rotating member. The suction pressure regulating valve 10 is configured to be installed at a suction port 301 of a compressor 30 in a parallel unit of compressors 30; for example, the suction pressure regulating valve 10 is installed between the suction port 301 of the compressor 30 and a suction pipeline of the parallel unit.

A suction channel 11 is provided in the valve body 9 for communicating with the suction port 301 of the compressor 30. Specifically, the suction channel 11 has two ports, one of which is connected to the suction port 301 of the compressor 30, and the other of which is connected to the suction pipeline of the parallel unit; or the suction channel 11 is disposed on the suction pipeline and close to the suction port 301 of the compressor 30, such that the suction port 301 of the compressor 30 is in communication with the suction pipeline through the suction channel 11.

The valve core 3 is movably disposed in the valve body 9. By displacing the valve core 3 relative to the valve body 9, the valve core 3 may extend into and retract from the suction channel 11 of the valve body 9, thereby changing the flow area of the suction channel 11. For example, when the valve core 3 extends into the suction channel 11, the flow area of the suction channel 11 decreases; when the valve core 3 retracts from the suction channel 11, the flow area of the suction channel 11 increases. The flow area of the suction channel 11 may be adjusted by adjusting the position of the valve core 3 relative to the valve body 9.

The rotating member is rotatably connected to the valve body 9 and cooperates with the valve core 3 in a linkage manner; for example, the rotating member may be configured as a knob, a rotating rod, a swing rod, a rocker, or other structures. When the rotating rod rotates relative to the valve body 9, the rotating rod drives the valve core 3 to displace relative to the valve body 9, such that the valve core 3 extends into and retracts from the suction channel 11 of the valve body 9, thereby changing the flow area of the suction channel 11. A linkage structure provided on the rotating member may be disposed as a screw-nut structure, a rack-and-pinion structure, or a worm-and-gear structure. The linkage structure is not limited here, as long as the linkage structure enables the rotation of the rotating member to drive the displacement of the valve core 3.

In use, the suction pressure regulating valve 10 is installed at the suction port 301 of the compressor 30. By adjusting the rotation of the rotating member relative to the valve body 9, the valve core 3 may extend into and retract from the suction channel 11 of the valve body 9, which may change the flow area of the suction channel 11, thereby regulating a suction flow at the suction port 301 of the compressor 30 and regulating the pressure in the internal pressure chamber of the compressor 30. In this way, by using the suction pressure regulating valve 10, real-time regulation may be made according to different working conditions or flows, which may allow the compressor 30 to achieve a good pressure equalization effect under various working conditions without repeated disassembly and assembly of pipelines for debugging, and to have superior reliability and safety.

In some embodiments, a guiding structure is provided between the valve body 9 and the valve core 3. Under an action of the guiding structure, the rotation of the valve core 3 relative to the valve body 9 may be restricted. In this way, the degree of freedom of the valve core 3 may be limited by the guiding structure, such that the valve core 3 may displace relative to the valve body 9 only in a direction in which the valve body 9 extends into and retracts from the suction channel 11, thereby improving a cooperation stability between the valve core 3 and the valve body 9. In the embodiment, the guiding structure may be at least one sliding groove mechanism, and a sliding direction of the sliding groove mechanism is the direction in which the valve body 9 extends into and retracts from the suction channel 11.

In the embodiment, the rotating member may be a valve stem 4. A first end of the valve stem 4 is located outside the valve body 9, a second end of the valve stem 4 is located inside the valve body 9, a middle part of the valve stem 4 is connected to the valve body 9, and the second end of the valve stem 4 is connected to the valve core 3. The middle part of the valve stem 4 is threadedly connected to the valve body 9, such that the valve stem 4 and the valve body 9 form a screw-nut mechanism. While the valve stem 4 rotates relative to the valve body 9, the valve stem 4 also axially displaces relative to the valve body 9. Moreover, the second end of the valve stem 4 is rotatably connected to the valve core 3, such that the valve stem 4 and the valve core 3 may rotate relative to each other (an axis of this rotation is consistent with an axis of the valve stem 4). Under the action of the guiding structure, when the valve stem 4 rotates and displaces relative to the valve body 9, the valve stem 4 only drives the valve core 3 to displace relative to the valve body 9, causing the valve core 3 to extend into and retract from the suction channel 11. In this way, the valve stem 4 drives the valve core 3 to displace relative to the valve body 9 through the screw-nut mechanism, and the adjustment method is thread screwing, which may achieve stepless and precise adjustment effects. Moreover, the movement of the valve core 3 relative to the valve body 9 will not reversely drive the movement of the valve stem 4 relative to the valve body 9, and the positioning of the adjustment position may be achieved, which is stable and reliable.

In addition, in other embodiments, the middle part of the valve stem 4 may be rotatably connected to the valve body 9, and the second end of the valve stem 4 is threadedly connected to the valve core 3. Under the action of the guiding structure, while the valve stem 4 rotates relative to the valve body 9, the valve stem 4 is threadedly screwed with the valve core 3, such that the valve core 3 displaces relative to the valve body 9.

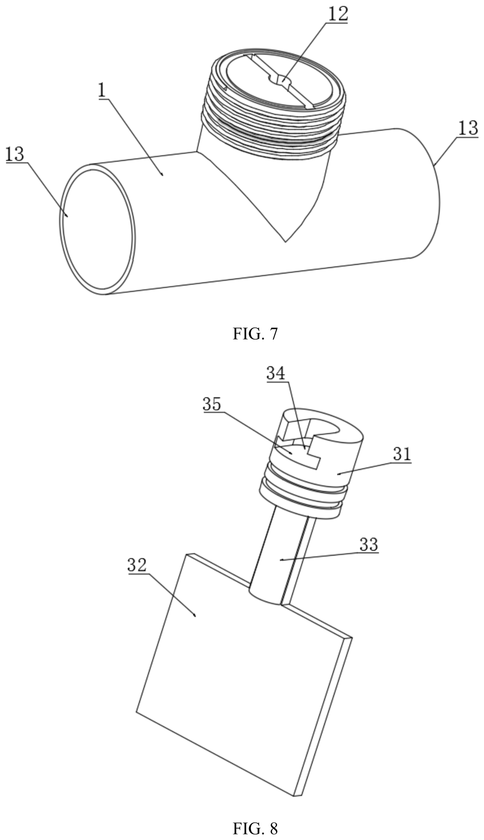

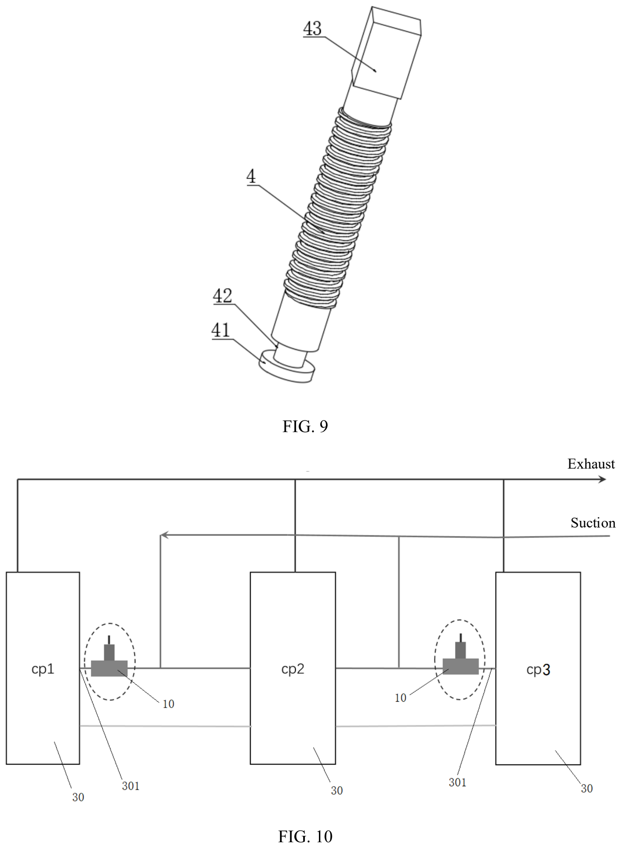

As shown in FIG. 8 and FIG. 9, an annular protrusion 41 is provided on an outer periphery of the second end of the valve stem 4. During processing, an annular groove 42 may be formed on an outer peripheral surface of the valve stem 4 close to the second end, such that the second end of the valve stem 4 forms an annular protrusion relative to the annular groove 42, or a diameter of the second end of the valve stem 4 may be directly increased. A rotating groove 34 is provided on an end surface of the valve core 3 facing the valve stem 4, and is disposed into a necked-in form; for example, the rotating groove 34 is disposed as an inverted T-shaped groove. An inner diameter of the rotating groove 34 matches an outer diameter of the annular protrusion 41, such that the annular protrusion 41 may rotate in the rotating groove 34. An inner diameter of an opening of the rotating groove 34 is less than the outer diameter of the annular protrusion 41, such that the annular protrusion 41 is limited in the rotating groove 34 by the opening of the rotating groove 34, thereby realizing a rotational connection between the valve core 3 and the valve stem 4. In this way, through a cooperation of the annular protrusion 41 and the rotating groove 34, the end of the valve stem 4 is fittingly connected inside the valve core 3, and the rotational connection between the valve stem 4 and the valve core 3 is realized, thus the suction pressure regulating valve 10 has a simple structure, is stable and reliable, and is convenient for processing.

In the embodiment, a notch 35 may be provided on a groove wall of the rotating groove 34, and the notch 35 is located on an outer periphery of the valve core 3 and penetrates through the groove wall of the rotating groove 34. The shape and size of the notch 35 match the shape and size of the second end of the valve stem 4, such that the annular protrusion 41 at the second end of the valve stem 4 extends into the rotating groove 34 through the notch 35. During assembly, the annular protrusion 41 at the second end of the valve stem 4 extends into the rotating groove 34 through the notch 35, such that the connection between the valve stem 4 and the valve core 3 may be completed, which is convenient, fast, simple to assemble, and saves time and effort. Moreover, after the rotational connection between the valve stem 4 and the valve core 3 is completed, the valve stem 4 and the valve core 3 are limited inside the valve body 9. Under a wrapping action of the valve body 9, the annular protrusion 41 at the second end of the valve stem 4 cannot protrude from the notch 35 or the opening of the rotating groove 34, thereby ensuring the stability of the connection between the valve stem 4 and the valve core 3.

In some embodiments, the valve body 9 comprises a three-way valve seat 1 and a valve sleeve 2. The three-way valve seat 1 is disposed as a T-shaped structure with two straight-through ports 13 and one side port 12, and the above-mentioned suction channel 11 is formed between the two straight-through ports 13. During installation, the two straight-through ports 13 are respectively connected to the suction port 301 of the compressor 30 and the suction pipeline of the parallel unit. The valve sleeve 2 is connected to the side port 12 of the three-way valve seat 1, such that an interior of the valve sleeve 2 is in communication with the suction channel 11 through the side port 12. Specifically, the valve sleeve 2 is sleeved on and threadedly connected to an outer periphery of the side port 12 to form the valve body 9.

The valve sleeve 2 is sleeved on the outer peripheries of the valve core 3 and the valve stem 4 to wrap the valve core 3 and the valve stem 4, wherein the middle part of the valve stem 4 is threadedly connected to the end of the valve sleeve 2 away from the three-way valve seat 1, one part of the valve core 3 is located in the valve sleeve 2, and the other part of the valve core 3 is located in the side port 12 of the three-way valve seat 1, such that the valve core 3 extends into and retracts from the suction channel 11 through the side port 12 of the valve seat. In this way, the structure of the three-way valve seat 1 and the valve sleeve 2 helps to simplify the structure of the suction pressure regulating valve 10 and improve convenience and stability of the assembly of the suction pressure regulating valve 10.

A first sealing structure 7 is provided between the valve sleeve 2 and the three-way valve seat 1, and the first sealing structure 7 is disposed around the outer periphery of the valve core 3 to realize sealing between the three-way valve seat 1 and the valve body 9, thereby preventing a gas in the suction channel 11 from leaking out through a gap between the valve sleeve 2 and the three-way valve seat 1. Specifically, the first sealing structure 7 comprises at least one sealing ring. An inner wall of the valve sleeve 2 has an annular step surface that abuts against an opening of the side port 12 of the three-way valve seat 1, a sealing groove is provided on the end surface of the side port 12, and the sealing ring of the first sealing structure is disposed in the sealing groove and abuts between the three-way valve seat 1 and the step surface of the valve sleeve 2.

A second sealing structure 8 is provided between the valve sleeve 2 and the valve core 3, and the second sealing structure 8 is disposed around the outer periphery of the valve core 3 to realize sealing between the valve core 3 and the valve body 9, thereby preventing the gas in the suction channel 11 from leaking out through the gap between the valve sleeve 2 and the valve core 3. Specifically, the second sealing structure 8 comprises at least one sealing ring. A sealing groove is provided on the outer peripheral surface of the valve core 3, and the sealing ring of the second sealing structure is disposed in the sealing groove and abuts between the valve core 3 and the inner wall of the valve sleeve 2. Here, the second sealing structure 8 has two sealing rings disposed in an axial direction, which further improves the sealing strength around the valve core 3.

The valve core 3 has a core portion 31 and a plate portion 32, wherein the core portion 31 is located in the valve sleeve 2 and slidably connected to the inner wall of the valve sleeve 2, and the plate portion 32 is located in the side port 12 of the three-way valve seat 1 and slidably fits with an inner wall of the side port 12. The core portion 31 and the plate portion 32 are connected to each other through a rod portion 33. When the rod portion 33 is located in the valve sleeve 2, the plate portion 32 retracts from the suction channel 11; when the rod portion 33 is located in the side port 12 of the three-way valve seat 1, the plate portion 32 extends into the suction channel 11. In this way, by the plate portion 32 extending into and retracting from the suction channel 11, the flow area of the suction channel 11 may be changed and a good regulation effect may be achieved.

It will be appreciated that the internal shape of the side port 12 of the three-way valve seat 1 is consistent with a shape of the plate portion 32 of the valve core 3, that is, an interior of the side port 12 forms a rectangular groove where the plate portion 32 slides. The plate portion 32 of the valve core 3 and the rectangular groove in the side port 12 of the three-way valve seat 1 form the above-mentioned guiding structure to limit the rotation of the valve core 3 relative to the valve body 9.

In a specific solution, the plate portion 32 of the valve core 3 is perpendicular to a flow direction of the suction channel 11, such that the plate portion 32 of the valve core 3 may change the flow area of the suction channel 11 to the greatest extent, which is beneficial to reducing a displacement stroke of the valve core 3 relative to the valve body 9 and reducing a volume of the valve structure.

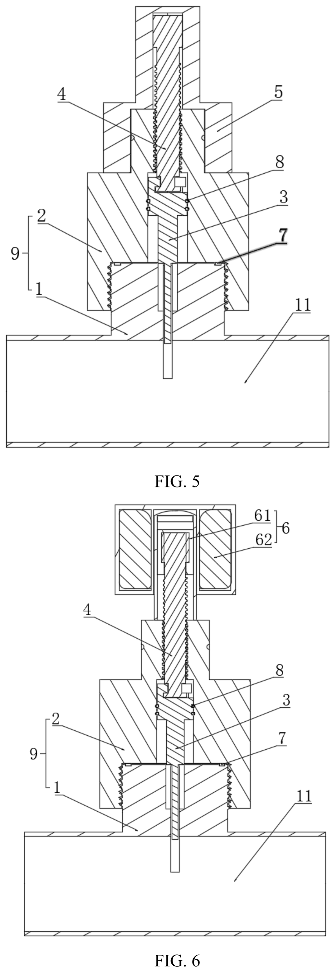

In the first embodiment, as shown in FIG. 5, the suction pressure regulating valve 10 is set into a manually operated form, and further comprises a valve cap 5. The valve cap 5 is sleeved on the first end of the valve stem 4 and may drive the valve stem 4 to rotate relative to the valve body 9; for example, a square hole is provided on the valve cap 5, and a square pin 43 is provided on the first end of the valve stem 4, and the square pin 43 is inserted into the square hole to realize the connection between the valve stem 4 and the valve cap 5. In this way, the rotation of the valve stem 4 may be controlled by rotating the valve cap 5, thereby adjusting the position of the valve core 3. Moreover, a marking structure is provided between the valve cap 5 and the valve body 9, and the marking structure is configured to clearly show the position of the valve core 3 relative to the suction channel 11. The marking structure may be disposed into the form of scales, color marks, or digital displays, so as to intuitively and quickly identify the position of the valve core 3 relative to the suction channel 11, further obtain the flow area of the suction channel 11, and thus more accurately regulate the flow rate of the suction port 301 of the compressor 30, ensuring the normal operation and safe operation of the system.

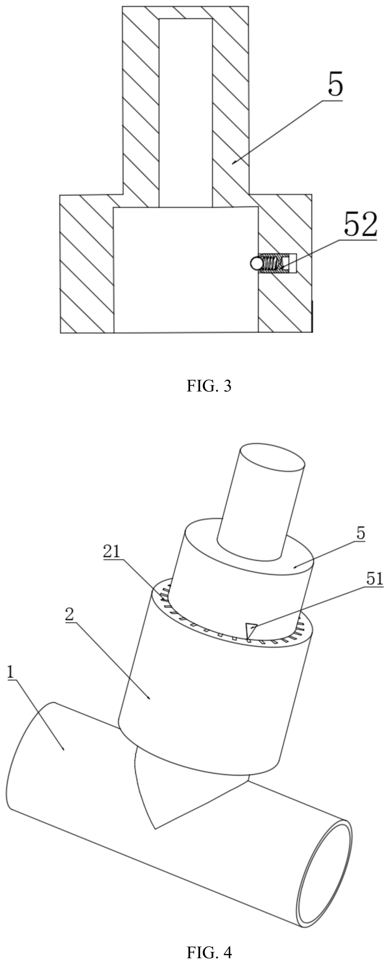

As shown in FIG. 1 and FIG. 4, the marking structure may comprise scale marks 21 and an indicator mark 51, wherein the scale marks 21 are provided on the valve body 9 and arranged into a ring shape, such that the scale marks 21 surround the outer peripheries of the valve stem 4 and the valve cap 5. The indicator mark 51 is provided on the valve cap 5 and points to one of the scale positions on the scale marks 21. The position of the valve core 3 relative to the suction channel 11 is obtained by checking the scale position pointed to by the indicator mark 51. Since the scale marks 21 are arranged in a full ring shape, more scale positions may be displayed, which is beneficial to improving the regulation accuracy.

A positioning structure is provided between the valve cap 5 and the valve body 9, and the positioning structure may position the valve cap 5 and the valve body 9 at one of marking positions in the marking structure, that is, position the indicator mark 51 at one of the scale positions in the scale marks 21, thereby improving the stability and reliability of regulation.

In the embodiment, as shown in FIG. 1 and FIG. 3, the positioning structure may comprise a positioning pin 52 and a plurality of positioning holes 22. The plurality of positioning holes 22 are arranged in a ring shape, and the positioning pin 52 may elastically abut in any one of the positioning holes 22 to realize position locking between the positioning pin 52 and the positioning hole 22; for example, the positioning pin 52 is configured as a spring ball positioning pin. One of the positioning pin 52 and the positioning hole 22 is provided on the valve body 9, and the other of the positioning pin 52 and the positioning hole 22 is provided on the valve cap 5. As an example, a plurality of positioning holes 22 are disposed around on the valve body 9, and the positioning pin 52 is disposed on an inner wall of the valve cap 5.

As shown in FIG. 1 to FIG. 5, a cylindrical boss is provided on an upper end surface of the valve body 9, the valve stem 4 extends from an upper end surface of the boss, and after the valve cap 5 is connected to the valve stem 4, the valve cap 5 is sleeved on an outer periphery of the boss and abuts against the upper end surface of the valve body 9, and an outer diameter of the valve cap 5 is less than a diameter of the upper end surface of the valve body 9. A plurality of positioning holes 22 are disposed around the outer periphery of the boss, the positioning pin 52 is provided on the inner wall of the valve cap 5, the scale marks 21 are disposed on the upper end surface of the valve seat and surround the boss, and the indicator mark 51 is disposed on an outer peripheral surface of the valve cap 5.

In the second embodiment, as shown in FIG. 6, the suction pressure regulating valve 10 is set into an electrically operated form, and further comprises an electromagnetic assembly 6. The electromagnetic assembly 6 has a stator 62 and a rotor 61; for example, the stator 62 may be an electromagnetic coil, and the rotor 61 may be a permanent magnet. By controlling the energization of the electromagnetic coil, the permanent magnet may be configured to rotate relative to the electromagnetic coil. One of the stator 62 and the rotor 61 is disposed on the valve stem 4, and the other of the stator 62 and the rotor 61 is disposed on the valve body 9. When the electromagnetic assembly 6 is energized, the stator 62 and the rotor 61 rotate relative to each other, thereby causing the valve stem 4 and the valve body 9 to rotate relative to each other. Specifically, the rotor 61 is sleeved and fixed on the outer periphery of the first end of the valve stem 4, and the stator 62 is sleeved on the outer periphery of the rotor 61 and fixedly connected to the valve body 9. In this way, by controlling the energization of the electromagnetic assembly 6, the valve stem 4 may be driven to rotate relative to the valve body 9, so as to realize the displacement of the valve core 3 relative to the valve body 9 and the change in the flow area of the suction channel 11, which is simple to operate, and saves time and effort.

Embodiments of the present disclosure further provide a parallel compressor system of compressors 30, which comprises the compressors 30, a pressure sensor 20, and a valve element. A plurality of compressors 30 are disposed in parallel; for example, two, three, or four compressors 30 may be connected in parallel. The pressure sensor 20 is disposed inside the compressor 30 and configured to sense the pressure in the internal pressure chamber of the compressor 30. The valve element is installed at the suction port 301 of the compressor 30; for example, the valve element is installed between the suction port 301 of the compressor 30 and the suction pipeline, such that the suction port 301 of the compressor 30 is in communication with the suction pipeline through the valve element. In the embodiment, the valve element may be a mechanical regulating valve or an electronic regulating valve, so as to regulate the flow rate of the suction port 301 of the compressor 30.

In use, the valve element is installed at the suction port 301 of the compressor 30. The pressure in the internal pressure chamber of the compressor 30 may be acquired through the pressure sensor 20, and then the valve element is regulated according to the acquired pressure in the internal pressure chamber, so as to regulate the suction flow rate of the suction port 301 of the compressor 30 and regulate the pressure in the internal pressure chamber of the compressor 30. When one of the compressors 30 is low in oil level, by adjusting the valve element installed at the suction port 301 of the compressor 30, the pressure in the internal pressure chamber of the compressor 30 is reduced, such that another compressor 30 transports the lubricating oil in the oil sump thereof to the compressor 30 with a lower pressure in the internal pressure chamber under the action of pressure, realizing an oil level regulation under the operation conditions of the plurality of compressors 30. In this way, by using the parallel compressor system of compressors 30, the suction flow rate of the compressor 30 may be regulated in real time according to the pressure in the internal pressure chamber of the compressor 30, thereby enabling the compressor 30 to achieve a good pressure equalization effect under various working conditions.

In the embodiment, the valve element may be the above-mentioned suction pressure regulating valve 10, and the suction pressure regulating valve 10 has a valve body 9, a valve core 3, and a rotating member. By regulating the rotation of the rotating member relative to the valve body 9, the valve core 3 may extend into and retract from the suction channel 11 of the valve body 9, which may change the flow area of the suction channel 11, thereby regulating the suction flow rate of the suction port 301 of the compressor 30 and regulating the pressure in the internal pressure chamber of the compressor 30, thus the suction pressure regulating valve 10 has a simple structure, and is stable and reliable.

In some preferred solutions, the suction pressure regulating valve 10 is set into an electrically operated form, and the suction pressure regulating valve 10 further comprises an electromagnetic assembly 6. The electromagnetic assembly 6 is in communication connection with the pressure sensor 20 to adjust the flow area of the suction channel 11 according to the sensing value of the pressure sensor 20. In this way, the suction pressure regulating valve 10 cooperates with the pressure sensor 20 to accurately adjust the suction pressure of the suction port 301 of the compressor 30, realizing the dynamic balance of the pressure in the internal pressure chamber of the compressor 30, thereby achieving the purpose of pressure equalization and oil equalization. This may realize the free combination of fixed and variable frequency compressors 30 and different numbers of compressors 30, reducing the pipeline design requirements of the compressors 30. At the same time, when a plurality of variable frequency compressors 30 are connected in parallel, when each of the variable frequency compressors 30 operates at a different rotation speed, the pressure balance between the compressors 30 may be realized by monitoring the cavity pressure of the compressors 30, and the oil level balance between the compressors 30 may be maintained when each of the variable frequency compressors 30 in the parallel compressor system of compressors 30 operates at a different rotation speed.

The basic principles of the present disclosure have been described above with reference to specific embodiments. However, it should be noted that the advantages, benefits, effects, etc., mentioned in the present disclosure are merely examples and not limitations, and these advantages, benefits, effects, etc., should not be construed as essential for each embodiment of the present disclosure. In addition, the specific details disclosed above are only for illustrative purposes and ease of understanding, not for limitation, and the above-mentioned details do not limit the present disclosure to necessarily adopt the above-mentioned specific details for implementation.

The block diagrams of devices, apparatuses, equipment, and systems involved in the present disclosure are only illustrative examples and are not intended to require or imply that the devices, apparatuses, equipment, and systems must be connected, arranged, or configured in the manner shown in the block diagrams. As those skilled in the art will recognize, these devices, apparatuses, equipment, and systems may be connected, arranged, and configured in any manner. The terms such as "including", "comprising", "having" and the like are open-ended terms, and refer to "comprising but not limited to", and may be configured interchangeably therewith. The terms "or" and "and" configured herein refer to the term "and/or" and may be configured interchangeably therewith unless the context clearly indicates otherwise. The term "such as" used herein refers to the phrase "such as but not limited to" and may be used interchangeably therewith.

It should also be noted that in the apparatuses, equipment, and methods of the present disclosure, the components or steps may be decomposed and/or recombined. These decompositions and/or recombinations should be regarded as equivalent solutions of the present disclosure.

The above description of the disclosed aspects is provided to enable any person skilled in the art to make or use the present disclosure. Various modifications to these aspects will be readily apparent to those skilled in the art, and the general principles defined herein may be applied to other aspects without departing from the scope of the present disclosure. Therefore, the present disclosure is not intended to be limited to the aspects shown herein but is to be accorded the widest scope consistent with the principles and novel features disclosed herein.

It should be understood that the qualifiers "first", "second", "third", "fourth", "fifth", and "sixth" configured in the description of embodiments of the present disclosure are only for clearer elaboration of the technical solutions and are not used to limit the protection scope of the present disclosure.

The above description has been given for illustrative and descriptive purposes. In addition, the above description is not intended to limit embodiments of the present disclosure to the forms disclosed herein. Although a plurality of example aspects and embodiments have been discussed above, those skilled in the art will recognize certain variations, modifications, changes, additions, and subcombinations thereof.

## Claims

1. A suction pressure regulating valve, **characterizing by** comprising:
a valve body (9) having a suction channel (11) for communicating with a suction port (301) of a compressor (30);
a valve core (3) disposed in the valve body (9) and allowed to extend into and retract from the suction channel (11) to change a flow area of the suction channel (11); and
a rotating member rotatably connected to the valve body (9) and cooperating with the valve core (3), wherein the rotating member is configured to rotate relative to the valve body (9) so as to drive the valve core (3) to extend into and retract from the suction channel (11).

2. The suction pressure regulating valve according to claim 1, **characterized in that** the rotating member is a valve stem (4) threadedly connected to the valve body (9), a first end of the valve stem (4) is located outside the valve body (9), and a second end of the valve stem (4) is located inside the valve body (9) and rotatably connected to the valve core (3);
wherein a guiding structure is provided between the valve body (9) and the valve core (3), and is configured to limit rotation of the valve core (3) relative to the valve body (9).

3. The suction pressure regulating valve according to claim 2, **characterized in that** an annular protrusion (41) is provided on an outer periphery of the second end of the valve stem (4), a rotating groove (34) in which the annular protrusion (41) is embedded is provided on the valve core (3), and an inner diameter of an opening of the rotating groove (34) is less than an outer diameter of the annular protrusion (41) to limit the annular protrusion (41) from protruding from the opening of the rotating groove (34).

4. The suction pressure regulating valve according to claim 3, **characterized in that** a notch (35) into which the annular protrusion (41) extends is provided on a groove wall of the rotating groove (34).

5. The suction pressure regulating valve according to claim 2, **characterized in that** valve body (9) comprises:
a three-way valve seat (1) having two straight-through ports (13) and one side port (12), wherein the suction channel (11) is formed between the two straight-through ports (13); and
a valve sleeve (2) sleeved on outer peripheries of the valve core (3) and the valve stem (4) and connected to the side port (12) of the three-way valve seat (1),
wherein the valve stem (4) is threadedly connected to the valve sleeve (2), and the valve core (3) extends into and retracts from the suction channel (11) through the side port (12).

6. The suction pressure regulating valve according to claim 5, **characterized in that** a first sealing structure (7) surrounding the valve core (3) is provided between the valve sleeve (2) and the three-way valve seat (1); and
a second sealing structure (8) surrounding the valve core (3) is provided between the valve sleeve (2) and the valve core (3).

7. The suction pressure regulating valve according to claim 1, **characterized in that** the valve core (3) has a plate portion (32), which is allowed to extend into and retract from the suction channel (11) to change the flow area of the suction channel (11).

8. The suction pressure regulating valve according to claim 7, **characterized in that** the plate portion (32) is perpendicular to a flow direction of the suction channel (11).

9. The suction pressure regulating valve according to claim 2, **characterizing by** further comprising a valve cap (5), wherein the valve cap (5) is sleeved on the first end of the valve stem (4) and is allowed to drive the valve stem (4) to rotate relative to the valve body (9); a marking structure is provided between the valve cap (5) and the valve body (9) to indicate a position of the valve core (3) relative to the suction channel (11).

10. The suction pressure regulating valve according to claim 9, **characterized in that** the making structure comprises scale marks (21) arranged in a ring arrangement on the valve body (9), and an indicator mark (51) disposed on the valve cap (5) and pointing to the scale marks (21).

11. The suction pressure regulating valve according to claim 9, **characterized in that** a positioning structure is provided between the valve cap (5) and the valve body (9) to position the valve cap (5) and the valve body (9) at one of marking positions in the marking structure.

12. The suction pressure regulating valve according to claim 11, **characterized in that** the positioning structure comprises a positioning pin (52) and a plurality of positioning holes (22), wherein the plurality of positioning holes (22) are arranged in a ring shape, and the positioning pin (52) is allowed to elastically abut in any one of the positioning holes (22); one of the positioning pin (52) and the positioning hole (22) is disposed on the valve body (9), and the other of the positioning pin (52) and the positioning hole (22) is disposed on the valve cap (5).

13. The suction pressure regulating valve according to any one of claims 1 to 12, **characterizing by** further comprising an electromagnetic assembly (6), wherein the electromagnetic assembly (6) has a stator (62) and a rotor (61), one of the stator (62) and the rotor (61) is disposed on the rotating member, and the other of the stator (62) and the rotor (61) is disposed on the valve body (9); the electromagnetic assembly (6) is energized to cause the stator (62) and the rotor (61) to rotate relative to each other, so as to drive the valve stem (4) and the valve body (9) to rotate relative to each other.

14. A parallel compressor system, **characterizing by** comprising:
a plurality of compressors (30) connected in parallel;
a pressure sensor (20) configured to sense a pressure in an internal pressure chamber of the compressor (30); and
a valve element, wherein the valve element is in communication with a suction port (301) of the compressor (30), such that a flux of the valve element is regulated according to a sensing value of the pressure sensor (20), and the valve element is the suction pressure regulating valve according to any one of claims 1 to 13.

15. The parallel compressor system according to claim 14, **characterized in that** the suction pressure regulating valve has an electromagnetic assembly (6), which is in communication connection with the pressure sensor (20) to adjust the flow area of the suction channel (11) according to the sensing value of the pressure sensor (20).
